# EUROPEAN PATENT APPLICATION

(11) **EP 2 656 942 A1**
(43) Date of publication of application: **30.10.2013**
(21) Application number: 11851026.2
(22) Date of filing: 19.12.2011
(51) Int. Cl.: B21J 13/02, B21J 5/06, B21K 21/14

(54) **PUNCH FOR COLD BACKWARD EXTRUSION FORGING**

(30) Priority: 20.12.2010 JP 2010283491
(71) Applicant: Showa Denko K.K., Tokyo 105-8518 (JP)
(72) Inventor: NATSUI, Masayuki, Kitakata-shi Fukushima 966-0845 (JP)
(74) Representative: Viering, Jentschura & Partner
(86) International application number: PCT/JP2011/079319
(87) International publication number: WO 2012/086573

(57) **Abstract**

A punch 1 includes a forming land portion 2 formed in parallel with a punch axis 7, a forming R-portion 3 having an arc-shaped cross-section and formed continuously with the forming land portion 2 on a tip end side with respect to the forming land portion 2, and a recess portion 5 formed on a base end side with respect to the forming land portion 2 and having a diameter smaller than a diameter of the forming land portion 2. A Rockwell hardness HRF of the blank 20 is within a range of 65 to 105. The curvature radius R of the forming R-portion 3 of the punch 1 is set to be larger than the thickness L of a cylindrical peripheral wall portion 21 of the forged product 25. The length B of the forming land portion 2 of the punch 1 is set within a range of 0.05 to 0.15 mm. The recess width C of the recess portion 5 with respect to the forming land portion 2 of the punch 1 is set within a range of 0.15 to 1.0 mm.

## Description

### TECHNICAL FIELD

The present invention relates to a punch for cold backward extrusion forging, a cold backward extrusion forging devices, a production method of a shaped member for a brake piston, a production method of a brake piston, and a production method of a closed-end cylindrical forged product.

### TECHNICAL BACKGROUND

As a method of forming a forged product from a metal blank, a cold backward extrusion forging method using a punch and a forming die is known (see, e.g., Non-Patent Document 1). According to the cold backward extrusion forging method, a closed-end cylindrical forged product, such as a shaped member for a brake piston, can be formed.

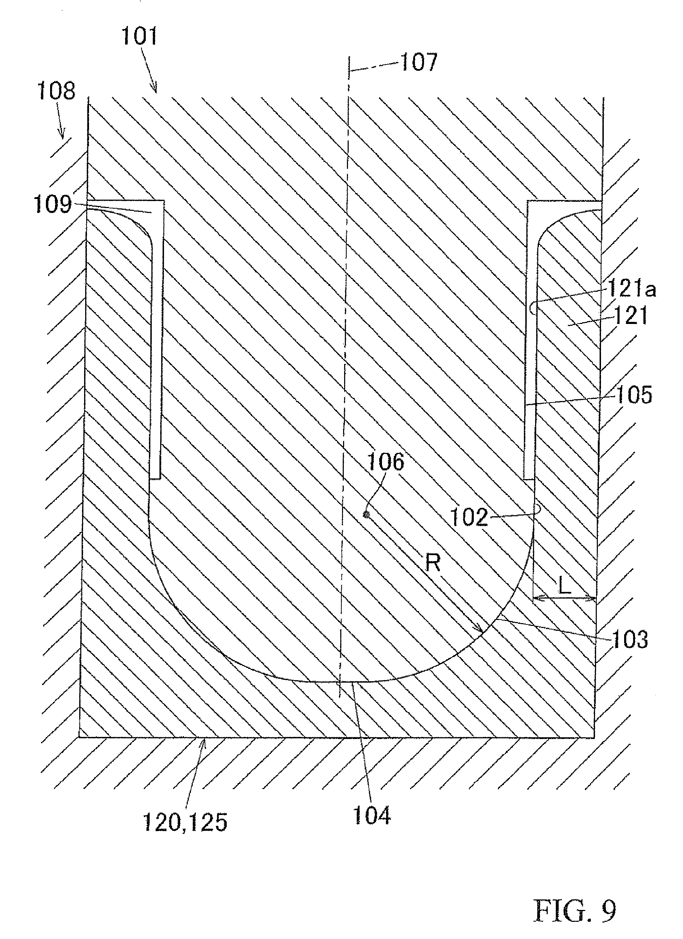

As shown in Fig. 9, the punch 101 used for the method includes a forming land portion 102 formed in parallel with a punch axis 107, a forming R-portion 103 having an arc-shaped cross-section and formed continuously with the forming land portion 102 on a tip end side with respect to the forming land portion 102, a forming tip end face 104 formed continuously from the forming land portion 102 on a tip end side with respect to the forming R-portion 103 and formed into a flat surface perpendicular to the punch axis 107, and a recess portion 105 formed on a base end side with respect to the forming land portion 102. The recess portion 105 has a diameter smaller than a diameter of the forming land portion 102 and is formed in parallel with the punch axis 107. The reference numeral "106" denotes a center of curvature of the forming R-portion 103. A metal blank 120 is arranged in the forming cavity 109 of the forming die 108. The surface of the blank 120 is subjected to a lubricating treatment, such as a bonderizing treatment. By being pressed with the punch 101 in the forming cavity 109, the material of the blank 120 flows backwards along the forming R-portion 103 and the forming land portion 102 of the punch 101. Thus, a cylindrical peripheral wall portion 121 is formed.

Generally, according to the cold backward extrusion forging method, since the cold forging is a room temperature forming, it is advantageous in terms of heating costs and productivity as compared to warm forging or hot forging.

### NON-PATENT DOCUMENT

Non-Patent Document 1: "Press forming die need to know" by Hirokazu YAMAMOTO, Second Edition, issued by Japan Machinist Corp. published on March 10, 1980, pages 85-92.

### SUMMARY OF THE INVENTION

### PROBLEMS TO BE SOLVED BY THE INVENTION

As an explanation of Fig.6.12 in the aforementioned non-Patent Document 1, on pages 86 to 87 of the non-Patent Document 1, it is described that, in the cold backward extrusion forging using a punch having a sphere-shaped tip end (so-called "spherical punch"), the workload increases rapidly as the cross-sectional reduction rate increases, and the spherical punch is rather suited for forming a shallow hole. Therefore, it is difficult to form a forged product 125 having a thin peripheral wall portion 121 using a spherical punch.

In cases where the forged product 125 is a closed-end cylindrical shape as shown in the figure, there was a problem that seizures would occur between the inner peripheral surface 121a of the blank 120 (forged product 125) and the punch 101 when forging the blank 120 by cold backward extrusion forging. Such seizures were especially likely to occur in cases where the curvature radius R of the forming R-portion 103 of the punch 101 was larger than the thickness L of the cylindrical peripheral wall portion 121 of the forged product 125 (blank 120), in other words, especially in cases where the thickness L of the peripheral wall portion 121 of the forged product 125 was not larger than the curvature radius R of the forming R-portion 103 of the punch 101, i.e., when the peripheral wall portion 121 was thin.

The present invention was made in view of the aforementioned technical background, and aims to provide a punch for cold backward extrusion forging capable of preventing occurrence of seizures even in cases where a curvature radius R of a forming R-portion of a punch is large and also capable of forming a closed-end cylindrical forged product having a high dimensional accuracy, a cold backward extrusion forging device equipped with the punch, a production method of a shaped member for a brake piston using the punch, a production method of a brake piston using the shaped member for a brake piston, and a production method of a closed-end cylindrical forged product using the punch.

The other objects and advantages of the present invention will be apparent from the following preferred embodiments.

### MEANS TO SOLVE THE PROBLEMS

The present invention provides the following means.

[1] A punch for cold backward extrusion forging for use in producing a closed-end cylindrical forged product by subjecting a metal blank to cold backward extrusion forging, comprising:
a forming land portion formed in parallel with a punch axis;
a forming R-portion having an arc-shaped cross-section and formed continuously with the forming land portion on a tip end side with respect to the forming land portion; and
a recess portion formed on a base end side with respect to the forming land portion and having a diameter smaller than a diameter of the forming land portion,
wherein a Rockwell hardness HRF of the blank is within a range of 65 to 105,
wherein a curvature radius of the forming R-portion is set to be larger than a thickness of a cylindrical peripheral wall portion of the forged product,
wherein a length of the forming land portion is set within a range of 0.05 to 0.15 mm, and
wherein a recess width of the recess portion with respect to the forming land portion is set within a range of 0.15 to 1.0 mm.

[2] A cold backward extrusion forging device equipped with the punch as recited in the aforementioned Item [1].

[3] A production method of a shaped member for a brake piston in which a metal blank is subjected to cold backward extrusion forging to form a shaped member for a closed-end cylindrical brake piston using a punch for cold backward extrusion forging, the punch including a forming land portion formed in parallel with a punch axis, a forming R-portion having an arc-shaped cross-section and formed continuously with the forming land portion on a tip end side with respect to the forming land portion, and a recess portion formed on a base end side with respect to the forming land portion and having a diameter smaller than a diameter of the forming land portion,
wherein a Rockwell hardness HRF of the blank is set within a range of 65 to 105,
wherein a curvature radius of the forming R-portion of the punch is set to be larger than a thickness of a cylindrical peripheral wall portion of the shaped member,
wherein a length of the forming land portion of the punch is set within a range of 0.05 to 0.15 mm, and
wherein a recess width of the recess portion of the punch with respect to the forming land portion is set within a range of 0.15 to 1.0 mm.

[4] The production method of a shaped member for a brake piston as recited in the aforementioned Item [3],
wherein the blank is subjected to cold backward extrusion forging in a forming cavity of a forming die corresponding to the punch,
wherein an outer peripheral edge portion of a bottom surface of the forming cavity of the forming die is provided with a concave portion formed continuously from a peripheral surface of the forming cavity, and
wherein the concave portion is configured to control stagnation of a material of the blank at a corner and vicinity thereof in the forming cavity between the bottom surface of the forming cavity and the peripheral surface of the forming cavity by allowing inflow of the material of the blank into the concave portion at the time of forging the blank.

[5] The production method of a shaped member for a brake piston as recited in the aforementioned Item [4],
wherein an opening width of the concave portion is set to be equal to or larger than a thickness of the peripheral wall portion of the shaped member.

[6] The production method of a shaped member for a brake piston as recited in the aforementioned Items [4] or [5],
wherein a side surface of the concave portion arranged on a center side of the forming cavity is inclined so that an opening width of the concave portion becomes wider.

[7] The production method of a shaped member for a brake piston as recited in any one of the aforementioned Items [3] to [6],
wherein at least one of a value obtained by dividing a surface roughness Ra of an upper surface of the blank by a surface roughness Ra of an outer peripheral surface of the blank, a value obtained by dividing a surface roughness Rz of an upper surface of the blank by a surface roughness Rz of an outer peripheral surface of the blank, a value obtained by dividing a waviness Wa of an upper surface of the blank by a waviness Wz of an outer peripheral surface of the blank, and a value obtained by dividing a waviness Wz of an upper surface of the blank by a waviness Wz of an outer peripheral surface of the blank is set within a range of 0.5 to 1.5.

[8] The production method of a shaped member for a brake piston as recited in any one of the aforementioned Items [3] to [7], wherein a constituent material of the blank is an aluminum alloy subjected to a solution treatment without being subjected to an O-treatment.

[9] A production method of a brake piston, comprising:
subjecting the shaped member for a brake piston obtained by the production method of a shaped member for a brake piston as recited in any one of the aforementioned Items [3] to [8] to an artificial aging treatment.

[10] A production method of a closed-end cylindrical forged product in which a metal blank is subjected to cold backward extrusion forging to form the closed-end forged product using a punch for cold backward extrusion forging, the punch including a forming land portion formed in parallel with a punch axis, a forming R-portion having an arc-shaped cross-section and formed continuously with the forming land portion on a tip end side with respect to the forming land portion, and a recess portion formed on a base end side with respect to the forming land portion and having a diameter smaller than a diameter of the forming land portion,
wherein a Rockwell hardness HRF of the blank is set within a range of 65 to 105,
wherein a curvature radius of the forming R-portion of the punch is set to be larger than a thickness of a cylindrical peripheral wall portion of the forged product,
wherein a length of the forming land portion of the punch is set within a range of 0.05 to 0.15 mm, and
wherein a recess width of the recess portion with respect to the forming land portion of the punch is set within a range of 0.15 to 1.0 mm.

### EFFECT OF THE INVENTION

The present invention exerts the following effects.

According to the punch for cold backward extrusion forging as recited in the aforementioned Item [1], even in cases where a curvature radius of the forming R-portion of the punch is set to be larger than the thickness of the peripheral wall portion of the forged product, in other words, in cases where the thickness of the peripheral wall portion of the forged product is not larger than the curvature radius of the forming R-portion of the punch, in the case of a blank having a Rockwell hardness HRF falling within a range of 65-105, occurrence of seizures between the inner peripheral surface of the blank and the punch can be prevented, and a closed-end cylindrical forged product having a high dimensional accuracy can be obtained.

According to the cold backward extrusion forging device as recited in the aforementioned Item [2], the same effects as the punch as recited in the aforementioned Item [1] can be exerted.

According to the production method of a shaped member for a brake piston as recited in the aforementioned Item [3], even in cases where the curvature radius of the forming R-portion of the punch is set to be larger than the thickness of the peripheral wall portion of the shaped member for a brake piston, in other words, in cases where the thickness of the peripheral wall portion of the shaped member is not larger than the curvature radius of the forming R-portion of the punch, in the case of a blank having a Rockwell hardness HFR falling within a range of 65-105, an occurrence of seizures between the inner peripheral surface of the blank and the punch can be prevented, and a shaped member for a brake piston having a high dimensional accuracy can be obtained.

According to the production method of a shaped member for a brake piston as recited in the aforementioned Item [4], the stagnation state (dead metal state) of the material can be improved, which can assuredly prevent occurrences of seizures, and also can further prevent occurrence of defects caused by drawing a skin caused by the stagnation of the material (dead metal). As a result, a high quality shaped member for a brake piston can be obtained.

According to a production method of a shaped member for a brake piston as recited in the aforementioned Item [5], occurrence of seizures can be further and assuredly prevented, and occurrence of defects caused by drawing a skin due to the stagnation of the material can be assuredly prevented.

According to the production method of a shaped member for a brake piston as recited in the aforementioned Item [6], occurrence of seizures can be further and assuredly prevented, and occurrence of defects caused by drawing a skin due to stagnation of the material can be assuredly prevented.

According to the production method of a shaped member for a brake piston as recited in the aforementioned Item [7], occurrence of seizures can be further and assuredly prevented.

According to the production method of a shaped member for a brake piston as recited in the aforementioned Item [8], a constituent material of the blank is an aluminum alloy subjected to a solution treatment without being subjected to an O-treatment, thereby exerting the following effects.

That is, in a conventional production method of a shaped member for a brake piston, the blank had to be subjected to an O-treatment before forging to reduce the hardness of the blank to improve the forgeability. Further, when the blank is subjected to an O-treatment, a shaped member for a brake piston formed by cold backward extrusion forging is low in hardness. Therefore, the shaped member had to be subjected to a solution treatment after forging. That is, in the conventional production method, at least two heat treatment processes had to be performed (an O-treatment and a solution treatment). On the other hand, in the production method of a shaped member for a brake piston according to the present invention, a shaped member for a brake piston having a high dimensional accuracy can be formed even by forging a hard blank having a Rockwell hardness HRF within a range of 65 to 105, so there is no need for the blank to be subjected to an O-treatment before forging. Also, since the blank does not need to be subjected to an O-treatment before forging, there is no need for the shaped member to be subjected to a solution treatment after forging. Therefore, the production method of a brake piston can be simplified and the production cost of a brake piston can be reduced.

According to the production method of a brake piston as recited in the aforementioned Item [9], a brake piston having a hardness adjusted to be suited for a brake piston can be obtained.

According to the production method of a forged product as recited in the aforementioned Item [10], occurrence of seizures between the inner peripheral surface of the blank and the punch can be prevented, and a closed-end cylindrical forged product having a high dimensional accuracy can be obtained.

### BRIEF DESCRIPTION OF THE DRAWINGS

[Fig. 1] Fig. 1 is a cross-sectional view showing a state before pressing a metal blank with a punch of a cold backward extrusion forging device according to a first embodiment of the present invention.
[Fig. 2] Fig. 2 is a cross-sectional view showing a state in which the blank is pressed with the punch.
[Fig. 3] Fig. 3 is an enlarged view of Fig. 2.
[Fig. 4] Fig. 4 is a process chart showing steps of producing a brake piston from a blank according to an embodiment of the present invention.
[Fig. 5] Fig. 5 is a cross-sectional view showing a state in which a metal blank is pressed with a punch of a cold backward extrusion forging device according to a second embodiment of the present invention.
[Fig. 6] Fig. 6 is a cross-sectional view showing a state in which a metal blank is pressed with a punch of a cold backward extrusion forging device according to a third embodiment of the present invention.
[Fig. 7] Fig. 7 is a view corresponding to Fig. 3 for explaining a forming R-portion of the punch of the cold backward extrusion forging device of the first embodiment.
[Fig. 8] Fig. 8 is a process chart showing steps of producing a brake piston from a blank according to a reference example.
[Fig. 9] Fig. 9 is a cross-sectional view showing a state in which a metal blank is pressed with a punch, which explains the technical background of the present invention.

### PREFERRED EMBODIMENTS FOR CARRYING OUT THE INVENTION

Next, some preferred embodiments of the present invention will be explained with reference to the attached drawings.

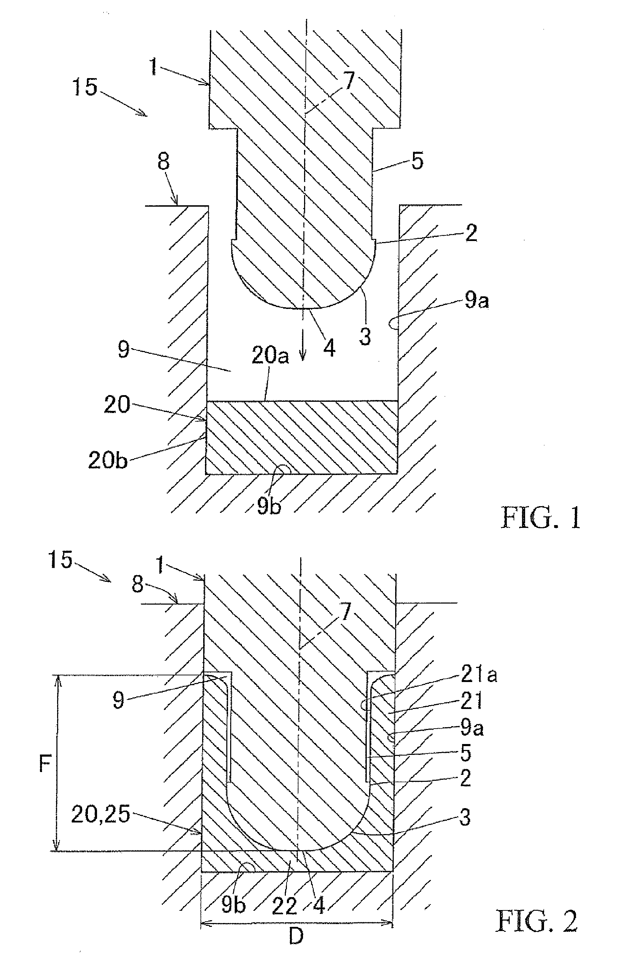

In Fig. 1, "15" is a cold backward extrusion forging device according to a first embodiment of the present invention. This forging device 15 is used for, e.g., forming a shaped member for a brake piston as a closed-end cylindrical forged product 25 from a metal blank 20 as shown in Figs. 1 and 2, and is equipped with a punch 1 for cold backward extrusion forging according to the first embodiment of the present invention and a forming die 8 corresponding to the punch 1. The forming die 8 includes a forming cavity 9.

The forged product 25 (a shaped member for a brake piston) is made of metal and includes, as shown in Fig. 2, a disc-shape bottom wall portion 22 and a cylindrical peripheral wall portion 21 integrally formed on the outer peripheral edge portion of the bottom wall portion 22. In the forged product 25, the bottom wall portion 22 corresponds to a crown portion of a brake piston and the peripheral wall portion 21 corresponds to a skirt portion of the brake piston.

The metal blank 20 used for the production of the forged product 25 is disc-shaped or columnar as shown in Fig. 1, and is arranged in the forming cavity 9 of the forming die 8. The blank 20 is pressed with the punch 1 in the forming cavity 9, which forms the closed-end cylindrical forged product 25 as shown in Fig. 2. In the first embodiment, the bottom surface 9b of the forming cavity 9 of the forming die 8 is formed into a flat circular shape. The radius of the peripheral surface 9a of the forming cavity 9 is constant in the direction of the central axis of the forming cavity 9.

The blank 20 has a Rockwell hardness HRF falling within a range of 65-105. The Rockwell hardness is a value measured in compliance with the "Rockwell hardness Examination- Examination method" by JIS (Japan Industrial Standard) Z2245: 2005, and the followings were used for the measurement: a scale of F, a steel ball of 1.5875 mm as an indenter, and a test load of 588.4 N. In the first embodiment, since the steel ball indenter is used as an indenter, the official hardness symbol is HRFS.

Furthermore, the entire surface of the blank 20 (that is, the upper surface 20a, the lower surface and the outer peripheral surface 20b of the blank 20) is subjected to a lubrication treatment, such as a bonderizing treatment.

The punch 1 is configured to advance in the forming cavity 9 of the forming die 8 along the punch axis 7 by a punch driving means (example: hydraulic cylinder) not illustrated to presses the blank 20. The punch 1 is shaped as follows.

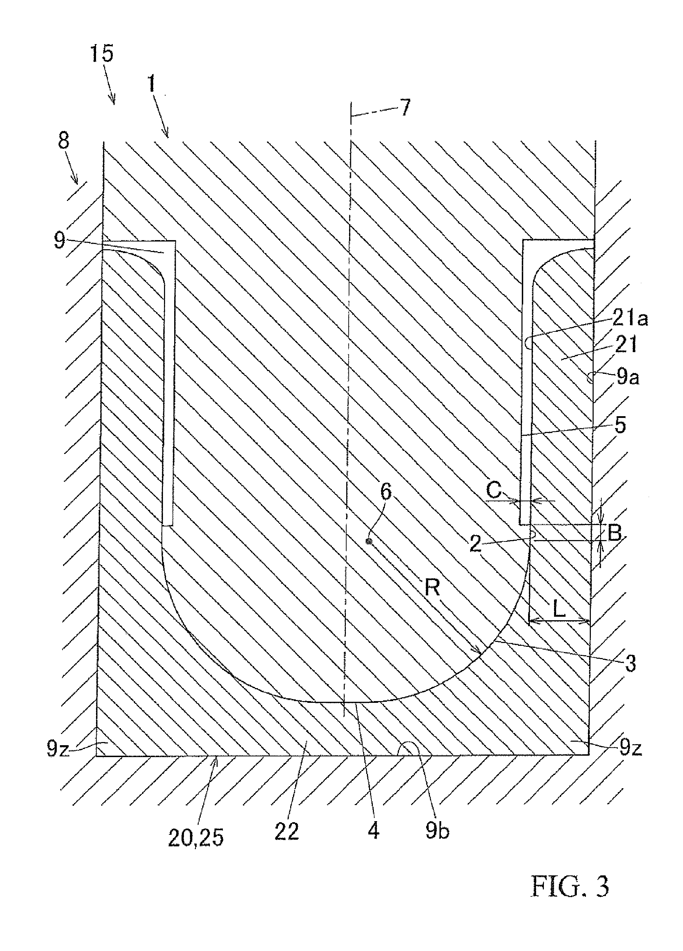

As shown in Fig. 3, in the punch 1, the press forming portion is formed into a hemispherical shape, and falls in the category of the so-called spherical punch. Specifically, the punch includes a forming land portion 2, a forming R-portion 3 having an arc-shaped cross-section, and a forming tip end face 4 as a press forming portion, and further includes a recess portion 5. The recess portion 5 is also called a stem portion of the punch 1. "6" denotes a curvature center of the forming R-portion 3.

The forming land portion 2 is formed in parallel with the punch axis 7. The forming R-portion 3 is formed continuously with the forming land portion 2 on a tip end side with respect to the forming land portion 2. The forming tip end face 4 is formed continuously with the forming R-portion 3 on the tip end side with respect to the forming R-portion 3 and is formed into a flat surface perpendicular to the punch axis 7. The recess portion 5 has a smaller radius than the forming land portion 2 and is formed in parallel with the punch axis 7. Therefore, between the forming land portion 2 and the recess portion 5, there is a step corresponding to the difference between the radius of the forming land portion 2 and the radius of the recess portion 5.

In the first embodiment, the forming R-portion 3 is formed smoothly and continuously with the forming land portion 2. Therefore, no angular portion is formed at the boundary of the forming R-portion 3 and the forming land portion 2. Furthermore, the forming tip end face 4 is formed smoothly and continuously with the forming R-portion 3. Therefore, no angular portion is formed at the boundary of the forming tip end face 4 and the forming R-portion 3.

In this specification, for the convenience of explanation, the curvature radius of the forming R-portion 3 is denoted as "R, " the length of the forming land portion 2 is denoted as "B," the recess width of the recess portion 5 with respect to the forming land portion 2, that is, the step between the forming land portion 2 and the recess portion 5, is denoted as "C." Further, the thickness of the cylindrical peripheral wall portion 21 of the forged product 25 (blank 20) is denoted as "L." "L" has the same dimension as the gap between the forming land portion 2 and the peripheral surface 9a of the forming cavity 9 of the forming die 8. "R," "B," "C," and "L" are all larger than 0 (zero). That is, R>0, B>0, C>0, and L>0.

In the punch 1 of the first embodiment, the curvature radius R of the forming R-portion 3 is set to be larger than the thickness L of the peripheral wall portion 21 of the forged product 25. That is, R>L, in other words, R/L>1.

Conventionally, when a hard blank 20 having a Rockwell hardness HRF within a range of 65 to 105 is subjected to cold backward extrusion forging using a punch 1 having a curvature radius R of the forming R-portion 3 larger than L, occurrence of seizures between the inner peripheral surface 21a of the blank 20 (forged product 25) and the punch 1 is likely to occur. The present inventors thought the reasons as follows. That is, if the curvature radius R of the forming R-portion 3 of the punch 1 is large, as compared to the case in which R is small, the material of the blank 20 pressed by the punch 1 gently flows along the forming R-portion 3 of the punch 1. Therefore, the material converges at the boundary position of the forming R-portion 3 and the forming land portion 2. This tends to generate a newly formed surface in the blank 20 at the boundary position, causing lack of lubricant at the inner peripheral surface 21a of the peripheral wall portion 21. As a result, it is thought that seizures occur.

As a result of eagerly examining the shape of the punch 1 to solve the aforementioned problems, the present inventors have found that the aforementioned problems can be solved by setting the length B of the forming land portion 2 within a range of 0.05-0.15 mm and setting the recess width C of the recess portion 5 with respect to the forming land portion 2 within a range of 0.15-1.0 mm.

When the length B of the forming land portion 2 is less than 0.05 mm, the growth of the peripheral wall portion 21 becomes unstable, resulting in a deteriorated dimensional accuracy of the inner diameter of the peripheral wall portion 21. On the other hand, when the length B exceeds 0.15 mm, since B is too long, seizures occur at the inner peripheral surface 21a of the peripheral wall portion 21.

When the recess width C is less than 0.15 mm, since C is too small, seizures between the inner peripheral surface 21a of the peripheral wall portion 21 and the recess portion 5 occur. Therefore, the recess width C is preferred to be 0.15 mm or larger to prevent occurrence of seizures. However, if C exceeds 1.0 mm, the rigidity of the recess portion 5 of the punch 1 decreases, which may cause a deteriorated dimensional accuracy of the forged product 25.

The temperature of the punch 1 at the time of forging is not limited, but it is especially preferred to set within a range of 120-190 ºC.

The constituent material of the punch 1 is not limited, but is preferred to be a hard metal. The hardness of the punch 1 (Vickers hardness) is not limited but is especially preferred to be HV 1400±200.

Furthermore, the production method of the first embodiment is especially suited for producing a forged product 25 of the following shape. That is, as shown in Fig. 2, the shape satisfies the dimensional condition of L/D=0.038-0.25, L= 1.5-5 mm, F/D= 0.25-3, and F= 10-60 mm, where D is the outer diameter of the forged product 25, and F is the depth of the hollow portion of the forged product 25. When a forged product 25 having this shape is produced using a conventional punch, problems occur, such as occurrence of seizures and a reduced dimensional accuracy of the forged product 25. On the other hand, when the forged product 25 having this shape is produced using the punch 1 of the first embodiment, no such problem occurs. That is, occurrence of seizures can be prevented, and the dimensional accuracy of the forged product 25 can be increased.

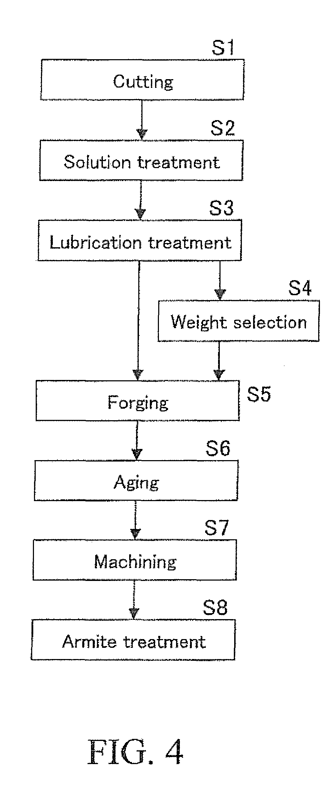

Fig. 4 is a process chart showing a preferred process of forming a shaped member for a brake piston as a closed-end cylindrical forged product 25 from the blank 20 and sequentially producing a brake piston from the shaped member. The constituent material of the blank 20 is an aluminum alloy.

As shown in Fig. 4, in Step S1, a blank 20 having a predetermined shape (that is, disc-shape or columnar shape) and predetermined dimensions is obtained by cutting, e.g., a bar-shaped aluminum continuously cast material, an aluminum alloy extruded material, or an aluminum drawn material. In Step S2, the blank 20 is subjected to a solution treatment in which the blank 20 is subjected to a heat treatment with a batch-type furnace, etc., under the condition of 495-530 ºC x 2.5-5.0 h and thereafter water cooled. In Step S3, the entire surface of the blank 20 is subjected to a bonderizing treatment as a lubrication treatment. That is, the surface of the blank 20 is degreased, then a phosphate film (example: tribasic zinc phosphate film) is formed on the surface of the blank 20. Thereafter, the surface is subjected to a metallic soap lubricating treatment using stearic acid soda, thereby forming a lubricating film (example: zinc stearate film) by reacting the phosphate film and stearic acid soda. The thickness of the lubricating film is, for example, 2-6 µm. In Step S4, the weight of the blank 20 is sorted to select a blank 20 to be used for forging. Step S4 is performed as needed and can be omitted. In Step S5, the blank 20 is subjected to cold backward extrusion forging with a cold backward extrusion forging device 15 of the first embodiment to form a shaped member for a brake piston (forged product 25). In Step S6, the shaped member is subjected to an artificial aging treatment with a continuous furnace as needed. The preferred condition for the aging treatment is 170-180 ºC x 1.5-2.5 h. In Step S7, the shaped member is machined into a preferred brake piston shape. In Step S8, the surface of the shaped member is subjected to an alumite treatment. A preferred closed-end cylindrical brake piston can be obtained by following the aforementioned Steps.

Furthermore, according to the production method of a shaped member for a brake piston of the first embodiment, the constituent material of the blank 20 is an aluminum alloy subjected to a solution treatment without being subjected to an O-treatment, it exerts the following effects.

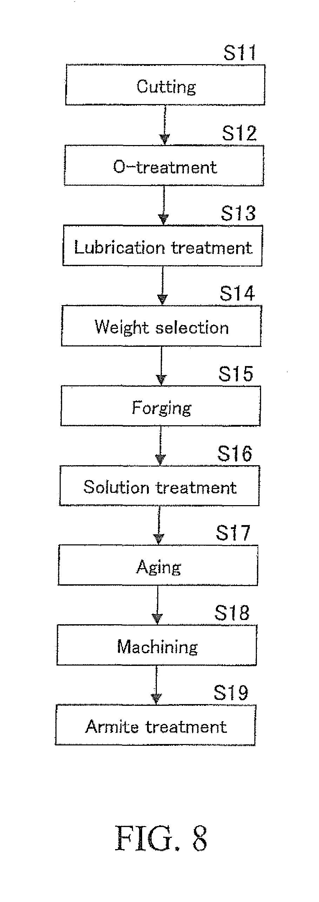

That is, in a conventional production method of a shaped member for a brake piston, it was necessary to subject the blank 20 to an 0-treatment before forging to decrease the hardness to thereby improve the forgeability of the blank 20 (see Fig. 8 described later). Furthermore, when the blank 20 is subjected to an O-treatment, the hardness of the shaped member for a brake piston formed by subjecting the blank 20 to cold backward extrusion forging is low. Therefore, the shaped member had to be subjected to a solution treatment after the forging. In other words, in the conventional production method, at least two heat treatment steps (an O-treatment and a solution treatment) had to be performed. On the other hand, in the production method of a shaped member for a brake piston of the first embodiment, a shaped member for a brake piston having a high dimensional accuracy can be formed even if a hard blank 20 having a Rockwell hardness HRF within a range of 65-105 is forged, and the blank 20 is not required to be subjected to an O-treatment before forging. Also, since the blank 20 is not required to be subjected to an O-treatment before forging, there is no need for the shaped member to be subjected to a solution treatment after forging. This enables simplification of the production process for a brake piston, which in turn can reduce the production cost for a brake piston.

The constituent material of the blank 20 is preferred to be an aluminum alloy having the following composition. That is, the constituent material of the blank 20 is preferred an aluminum alloy consisting of Si: 9.0-11.0 mass%, Fe: 0.50 mass% or less, Cu: 0.70-1.1 mass%, Mn: 0.15 mass% or less, Mg: 0.3-0.7 mass%, Zn: 0.25 mass% or less, the balance being Al and inevitable impurities. In the aluminum alloy having the composition, since it includes more Si than A6061, it also includes a large amount of eutectic Si. Therefore, in Step S8, the surface of the shaped member (forged product 25) can be subjected to a hard alumite treatment which causes no or almost no cracks. On the other hand, since the blank 20 of the aluminum alloy having this composition is hard (Rockwell hardness HRF: 65-105), although it is suited for a brake piston, an angular shape is unlikely to be developed during cold backward extrusion forging, resulting in a deteriorated dimensional accuracy. However, when the blank 20 is subjected to cold backward extrusion forging using the punch 1 of the first embodiment, a shaped member for a brake piston having a high dimensional accuracy can be formed.

Furthermore, in the production method of the first embodiment, it is preferred that at least one of a value obtained by dividing a surface roughness Ra of an upper surface 20a of the blank 20 by a surface roughness Ra of an outer peripheral surface 20b of the blank 20, a value obtained by dividing a surface roughness Rz of an upper surface 20a of the blank 20 by a surface roughness Rz of an outer peripheral surface 20b of the blank 20, a value obtained by dividing a waviness Wa of an upper surface 20a of the blank 20 by a waviness Wa of an outer peripheral surface 20b of the blank 20, and a value obtained by dividing a waviness Wz of an upper surface 20a of the blank 20 by a waviness Wz of an outer peripheral surface 20b of the blank 20 is set within a range of 0.5-1.5. With the aforementioned settings, occurrence of seizures between the inner peripheral surface 21a of the blank 20 (forged product 25) and the punch 1 can be assuredly prevented.

Here, the upper surface 20a of the blank 20 denotes a contact surface of the blank 20 to the punch 1. The surface roughness Ra, Rz, waviness Wa, and Wz are values measured in compliance with JIS B0601:2001. JIS B0601:2001 is in compliance with ISO 4287: 1997. The surface roughness Ra is a calculated average roughness of the roughness curved line. The surface roughness Rz is the maximum height of the roughness curved line. The waviness Wa is a calculated average waviness of the waviness curved line. The waviness Wz is the maximum height of the waviness curved line. As a method to adjust the surface textures of the upper surface 20a and the outer peripheral surface 20b of the blank 20 to fall within the aforementioned range, for example, the surfaces 20a and 20b can be subjected to the aforementioned bonderizing treatment. Furthermore, the lower surface of the blank 20 is especially preferred to be adjusted to the same surface texture as the upper surface 20a.

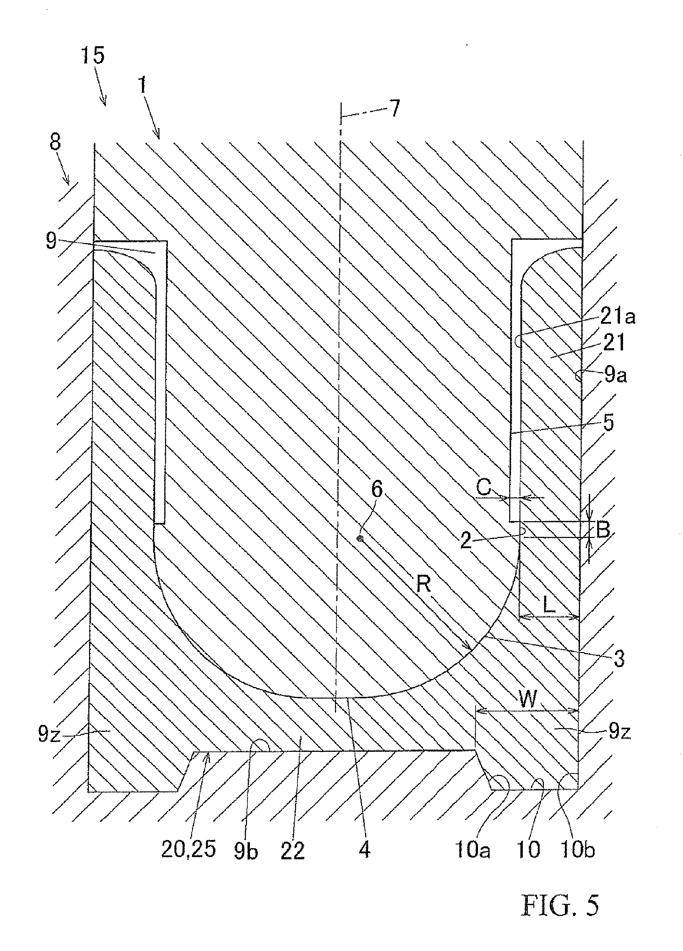

In a cold backward extrusion forging device 15 according to a second embodiment of the present invention as shown in Fig. 5, an annular concave portion 10 extending along the entire circumference of the outer peripheral edge portion of the bottom surface 9b of the forming cavity 9 of the forming die 8 is formed continuously with the peripheral surface 9a of the forming cavity 9. The concave portion 10 exerts an effect of controlling stagnation of the material at a corner 9z and vicinity thereof in the forming cavity 9 between the bottom surface 9b of the forming cavity 9 and the peripheral surface 9a of the forming cavity 9 by allowing inflow of the material of the blank 20 into the concave portion 10 at the time of forging.

That is, at the time of forging the blank 20, stagnation of the material of the blank 20 is likely to occur at the corner 9z and vicinity thereof in the forming cavity 9 of the forming die 8 between the bottom surface 9b and the peripheral surface 9a. Generally, the stagnation of the material of the blank 20 is called "dead metal". If stagnation of the material (dead metal) occurs at the corner 9z and vicinity thereof at the time of forging the blank 20, seizures are likely to occur between the inner peripheral surface 21a of the blank 20 (forged product 25) and the punch 1, and furthermore, defects caused by drawing the skin easily occurs in the forged product 25. To solve these problems, in the forming die 8 of the second embodiment, the concave portion 10 is formed at the outer peripheral edge portion of the bottom surface 9b of the forming cavity 9. With this, at the time of forging the blank 20, the material of the blank 20 flows into the concave portion 10 from the tip end side of the punch 1 and flows toward the gap between the forming land portion 2 of the punch 1 and the peripheral surface 9a of the forming cavity 9 of the forming die 8. That is, the material flows smoothly at the corner 9z and vicinity thereof. As a result, the stagnation state of the material (dead metal state) at the corner 9z and vicinity thereof is improved. As a result, occurrence of seizures can be assuredly prevented and occurrence of defects caused by drawing the skin due to stagnation of the material can be prevented. Therefore, a high quality forged product 25 can be obtained.

The opening width W of the concave portion 10 is set to be equal to or larger than the thickness L of the peripheral wall portion 21 of the forged product 25 (that is, W≧L). This enables further smooth flow of the material of the blank 20 at the corner 9z and vicinity thereof, which can assuredly prevent occurrence of seizures and also can assuredly prevent occurrence of defects caused by drawing the skin due to stagnation of the material.

Furthermore, a side surface 10a among a pair of side surfaces 10a and 10b of the concave portion 10 facing one another and arranged on a center side of the forming cavity 9 of the forming die 8 is inclined so that the opening width W of the concave portion 10 becomes wider. In detail, the side surface 10a is inclined so that the opening width W of the concave portion 10 becomes gradually wider from the bottom portion of the concave portion 10 toward the opening portion side of the concave portion 10. As a result, the material of the blank 20 flows even more smoothly at the corner 9z and vicinity thereof, which can more assuredly prevent occurrence of seizures and also can more assuredly prevent occurrence of defects caused by drawing the skin due to stagnation of the material. The other side surface 10b of the concave portion 10 is flush with the peripheral surface 9a of the forming cavity 9.

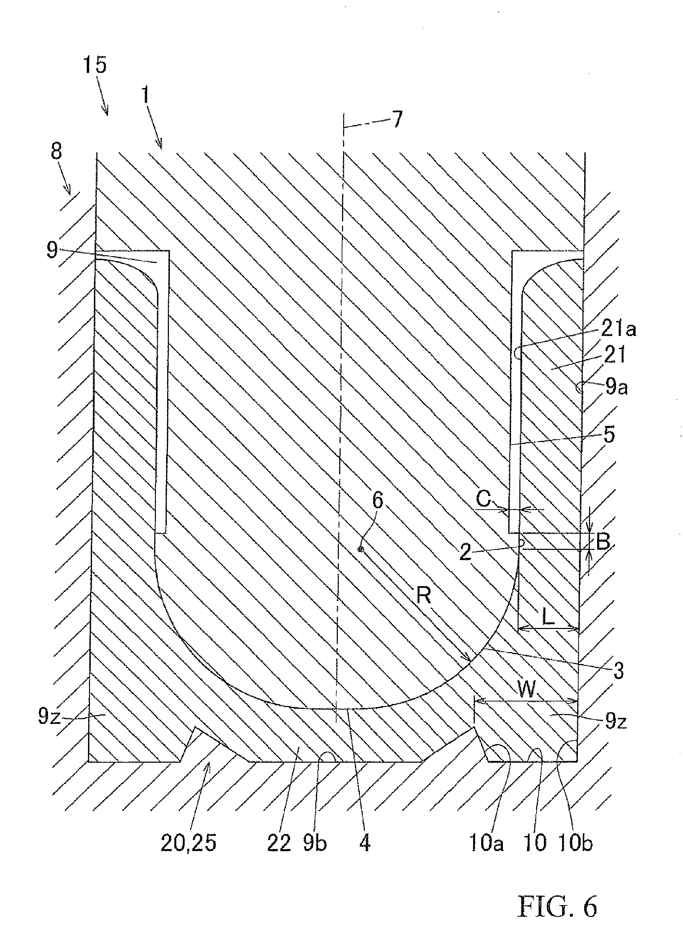

In a cold backward extrusion forging device 15 according to a third embodiment of the present invention as shown in Fig. 6, in the same manner as in the second embodiment, an annular concave portion 10 extending along the entire circumference in the circumferential direction of the outer peripheral edge portion of the bottom surface 9b of the forming cavity 9 of the forming die 8 is formed continuously with the peripheral surface 9a of the forming cavity 9. The concave portion 10 exerts the same effects as the concave portion of the second embodiment. In the forming die 8, an adjacent portion of the bottom surface 9b of the forming cavity 9 adjacent to the side surface 10a among a pair of side surfaces 10a and 10b of the concave portion 10 and arranged on a center side of the forming cavity 9 of the forming die 8 is protruded inwardly of the forming cavity 9. Even if the bottom surface 9b and the concave portion 10 of the forming cavity 9 are formed into the aforementioned shape, the same effects as in the second embodiment can be exerted.

Although illustrative embodiments of the present invention have been described herein, the present invention is not limited to the aforementioned embodiments, and can be changed variously within the scope that does not deviate from the spirit of the present invention.

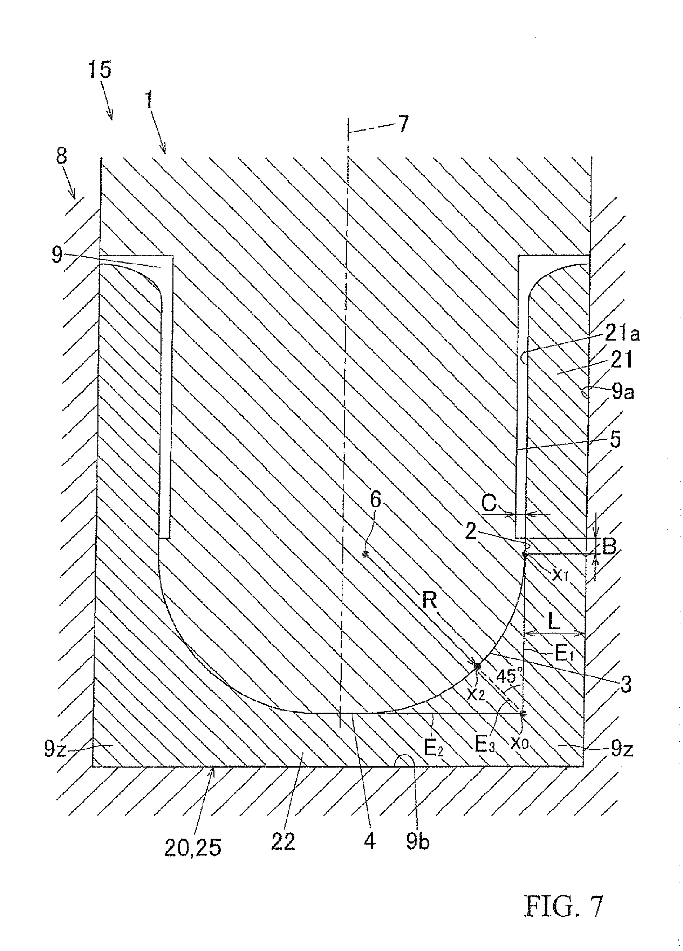

In the present invention, when the cross-section of the forming R-portion 3 of the punch 1 is not a simple arc-shape (e.g., when the cross-section of the forming R-portion 3 is a composite R-portion, a portion of parabola, or a portion of an ellipse), the curvature radius R of the forming R-portion 3 is preferably formed into an arc approach at a portion immediately before contacting the forming land portion 2. For example, as shown in Fig. 7, in the vertical cross-section of the punch 1 (cross-section including the punch axis 7 of the punch 1), it is preferred that the average value of the curvature radius of the curved line in the X1-X2 region in the forming R-portion 3 is R, where the intersecting point of an extended line E1 in which a line along the forming land portion 2 is extended from the boundary X1 of the forming land portion 2 and the forming R-portion 3 toward the tip end side of the punch 1, and a radius line E2 extended in the radially outward direction perpendicular to the punch axis 7 from the tip end of the punch 1 is X0 and where the intersecting point in which the inclined line E3 (shown with a dashed line) inclined by 45 degrees to the forming R-portion 3 side from the extended line E1 as the intersecting point X0 as the center intersects with the forming R-portion 3 is X2.

Also, in the present invention, the punch 1 can be a punch which does not have a forming tip end face 4, i.e., the tip end side entire portion of the punch 1 with respect to the forming land portion 2 can be formed into a hemispherical shape formed only by the forming R-portion 3.

Also, in the present invention, it is especially preferred that the closed-end cylindrical forged product 25 is a shaped member for a brake piston, but can also be a shaped member for a compressor piston cup for a vehicle, or can be a cup-shaped product.

### EXAMPLES

Next, specific Examples of the present invention will be explained. It should be noted, however, that the present invention is not specifically limited to these Examples. In the following explanation, for an easy understanding of Examples, Comparative Examples, and Reference Examples, the same symbols used in the aforementioned embodiments are used.

### <Examples 1-9, Comparative Examples 1-14, Reference Examples 1-6>

**[Table 1]**

| Type of blank | Component (mass%) | | | | | | | | |
|---|---|---|---|---|---|---|---|---|---|
| | Si | Fe | Cu | Mn | Mg | Cr | Zn | Ti | Al |
| M1 | 9.0-11.0 | ≦ 0.50 | 0.70-1.1 | ≦ 0.15 | 0.3-0.7 | - | ≦ 0.25 | - | Bal |
| M2 | 0.4-0.8 | ≦ 0.7 | 0.15-0.40 | ≦ 0.15 | 0.8-1.2 | 0.04-0.35 | ≦ 0.25 | ≦ 0.15 | Bal |
| M3 | ↑ | ↑ | ↑ | ↑ | ↑ | ↑ | ↑ | ↑ | ↑ |
| M4 | 10.5-12.5 | ≦ 0.50 | 3.5-5.0 | ≦ 0.2 | 0.4-0.8 | - | ≦ 0.20 | - | Bal |
| M5 | ↑ | ↑ | ↑ | ↑ | ↑ | ↑ | ↑ | ↑ | ↑ |

**[Table 2]**

| Type of blank | Heat treatment to blank | Properties of blank | |
|---|---|---|---|
| | | Hardness (HRF) | Strength, Elongation |
| M1 | Solution treatment (510 ºC × 3h - water cooling) | 80 | - |
| M2 | Solution treatment (530 ºC × 3h - water cooling) | 72 | 180 N/mm², 16% |
| M3 | O-treatment (390 ºC × 2h - gradual cooling 13h, 250 ºC out of furnace) | 10 | 145 N/mm², 16% |
| M4 | Solution treatment (495 ºC × 3h - water cooling) | 97 | - |
| M5 | O-treatment (390 ºC × 2h - gradual cooling 13h, 250 ºC out of furnace) | 55 | 182 N/mm², 18.6% |

Blanks 20 of five types M1 to M5 shown in Tables 1 and 2 were prepared. All of these blanks 20 were used for producing a shaped member for a brake piston and all of the constituent materials of the blanks were aluminum alloys. Table 1 shows components of the composition of each constituent material of the blank 20. Table 2 shows heat treatments subjected to the blanks 20 and properties of the blanks 20.

The blanks 20 of types M1, M2 and M4 among these blanks 20 were produced according to Steps S1-S4 in the process chart shown in Fig. 4 as will be understood from the column of "Heat treatment to material" in Table 2, and the Rockwell hardness HRF was within a range of 65-105, i.e., relatively hard. On the other hand, the blanks 20 of types M3 and M5 were used as Reference Examples of the present invention and had a Rockwell hardness HRF of less than 65, i.e., relatively soft.

The blanks 20 of types M3 and M5 were produced according to Steps S11-S14 of the process chart shown in Fig. 8. The steps were conventional steps for producing a shaped member for a brake piston. Hereinafter, the process chart will be explained. In Step S11, a blank 20 having a predetermined shape and dimensions was obtained by cutting, e.g., a bar-shaped aluminum continuously cast material, an aluminum alloy extruded material, an aluminum drawn material, etc. In Step S12, the blank 20 was subjected to an O-treatment (annealing) to reduce the hardness of the blank 20 to thereby improve the forgeability thereof. In Step S13, the entire surface of the blank 20 was subjected to a bonderizing treatment as a lubrication treatment. In Step S14, the weights of the blank 20 are sorted out to select materials 20 to be used for forging. In Step S15, the selected blank 20 was subjected to cold backward extrusion forging to form a shaped member for a brake piston (forged product 25). In Step S16, to increase the hardness of the blank 20, the shaped member was subjected to a solution treatment. In Step S17, the shaped member was subjected to an artificial aging treatment. In Step S18, the shaped member was machined into the desired brake piston shape. In Step S19, the surface of the shaped member was subjected to an alumite treatment. By following the aforementioned process, a closed-end cylindrical brake piston could be obtained.

Using the cold backward extrusion forging device 15 of the first embodiment, the blanks 20 of five types (M1-M5) were subjected to cold backward extrusion while variously changing the forging conditions to form shaped members for brake pistons as closed-end cylindrical forged products 25. In the forged product 25 (shaped member for a brake piston), D was 28 mm and F was 30 mm. The inner diameter dimensional accuracy and the existence of seizures and damages on the inner peripheral surface 21a were evaluated for the forged product 25. The results are shown in Table 3. In the punch 1 used for forging, the forming R-portion 3 was formed smoothly and continuously with the forming land portion 2. The constituent material of the punch 1 was a hard metal and the hardness of the punch 1 was HV1400.

**[Table 3]**

| | Type of blank | Forging Conditions | | | | | Evaluation | | |
|---|---|---|---|---|---|---|---|---|---|
| | | R (mm) | L (mm) | R/L | B (mm) | C (mm) | Dimensional Accuracy | Seizures | Defects |
| Ex. 1 | M1 | 11.25 | 2.6 | 4.33 | 0.05 | 0.15 | ○ | ⊚ | ○ |
| Ex. 2 | | | | | 0.05 | 0.5 | ○ | ⊚ | ○ |
| Ex. 3 | | | | | 0.1 | 0.5 | ○ | ⊚ | ○ |
| Ex. 4 | | | | | 0.15 | 0.15 | ○ | ⊚ | ○ |
| Ex. 5 | | | | | 0.15 | 1 | ○ | ⊚ | ○ |
| Comp. Ex. 1 | | | | | 0.15 | 0.05 | ○ | × | × |
| Comp. Ex. 2 | | | | | 0.15 | 0.1 | ○ | × | × |
| Comp. Ex. 3 | | | | | 0.15 | 1.5 | × | × | × |
| Comp. Ex. 4 | | | | | 0.2 | 0.5 | ○ | × | × |
| Comp. Ex. 5 | | | | | 0.5 | 0.5 | ○ | × | × |
| Comp. Ex. 6 | | | | | 4 | 0.05 | ○ | × | × |
| Comp. Ex. 7 | | | | | 4 | 0.1 | ○ | × | × |
| Comp. Ex. 8 | | | | | 4 | 0.5 | ○ | × | × |
| Ref. Ex. 1 | | 2 | 7.8 | 0.26 | 26 | ○ | ○ | ○ | ○ |
| Ex. 6 | M2 | 11.25 | 2.6 | 4.33 | 0.05 | 0.15 | ○ | ⊚ | ○ |
| Ex. 7 | | | | | 0.15 | 0.15 | ○ | ⊚ | ○ |
| Comp. Ex. 3 | | | | | 0.15 | 0.1 | ○ | × | × |
| Comp. Ex. 10 | | | | | 4 | 0.05 | ○ | × | × |
| Comp. Ex. 11 | | | | | 4 | 0.1 | ○ | × | × |
| Ref. Ex. 2 | | 3.7 | 8.25 | 0.45 | 23 | 0 | ○ | ○ | ○ |
| Ref. Ex. 3 | M3 | 11.25 | 2.6 | 4.33 | 4 | 0.05 | ○ | ○ | ○ |
| Ref. Ex. 4 | | | | | 4 | 0.1 | ○ | ○ | ○ |
| Ex. 8 | M4 | 11.25 | 2.6 | 4.33 | 0.05 | 0.15 | ○ | ⊚ | ○ |
| Ex. 9 | | | | | 0.15 | 0.15 | ○ | ⊚ | ○ |
| Comp. Ex. 12 | | | | | 0.15 | 0.1 | ○ | × | × |
| Comp. Ex. 13 | | | | | 4 | 0.05 | ○ | × | × |
| Comp. Ex. 14 | | | | | 4 | 0.1 | ○ | × | × |
| Ref. Ex. 5 | | 2 | 2.1 | 0.95 | 31 | 0 | ○ | ○ | ○ |
| Ref. Ex. 6 | M5 | 2 | 2.1 | 0.95 | 31 | 0 | ○ | ○ | ○ |

In the column of "forging conditions" in Table 3, R, L, B and C mean as follows.

R: Curvature radius of the forming R-portion 3 of the punch 1
L: Thickness of the peripheral wall portion 21 of the forged product 25
B: Length of the forming land portion 2 of the punch 1
C: Recess width of the recess portion 5 of the punch 1 with respect to the forming land portion 2

Also, in the column of "evaluation," the meanings of the symbols in the column of "dimensional accuracy" are as follows.

○: Dimensional accuracy of the inner diameter was high
X: Dimensional accuracy of the inner diameter was low

In the column of "evaluation," the meanings of the symbols in the column of "seizures" are as follows.

⊚: No seizure occurred on the inner peripheral surface 21a and the glossiness of the inner peripheral surface 21a was high
○ : No seizure occurred on the inner peripheral surface 21a and the glossiness of the inner peripheral surface 21a was low
× : Seizures occurred on the inner peripheral surface 21a

Also, in the column of "evaluation," the symbols in the column of "defects" mean as follows.

○ : There were no damages on the inner peripheral surface 21a
X: There were damages on the inner peripheral surface 21a

As it can be understood from Examples in Table 3, when a comparatively hard blank (types: M1, M2, M4) having a Rockwell hardness HRF within a range of 65-105 (specifically within a range of 72-97) were subjected to cold backward extrusion forging, even when the R of the used punch 1 was larger than L, occurrence of seizures between the punch 1 and the inner peripheral surface 21a of the blank 20 could be prevented and a closed-end cylindrical forged product 25 (a shaped member for a brake piston) having a high dimensional accuracy and not having defects could be obtained by setting B within a range of 0.05-0.15 mm and C within a range of 0.15-1.0 mm. On the other hand, as it can be understood from Comparative Examples, when B and C were outside the predetermined range, such high-quality forged product could not be obtained.

Also, as it can be understood from Reference Examples 1, 2 and 5, when a comparatively hard blank (types: M1, M2, and M4) were subjected to cold backward extrusion forging, when the R of the used punch 1 was smaller than L, a high-quality forged product could be obtained even if B and C were outside the predetermined range. Also, as it can be understood from Reference Examples 3, 4 and 6, when a comparatively soft blank (types: M3 and M5) were subjected to cold backward extrusion forging, a high-quality forged product could be obtained even if B and C were outside the predetermined range. Therefore, it is understood that, when subjecting a hard blank 20 to cold backward extrusion forging using a punch 1 having R larger than L, the preferable condition for obtaining a high-quality forged product 25 is to set B and C of the punch 1 within the predetermined range.

### <Examples 21-24>

The blanks 20 of type M2 shown in Tables 1 and 2 was prepared. Then, using a forming die 8 in which a concave portion 10 was not formed on the outer peripheral edge portion of the bottom surface 9b of the forming cavity 9 like the forming die 8 of the cold backward extrusion forging device 15 of the first embodiment and a forming die 8 in which a concave portion 10 was formed on the outer peripheral edge portion of the bottom surface 9b of the forming cavity 9 like the forming die 8 of the cold backward extrusion forging device 15 of the second embodiment, and further, by variously changing the opening width W of the concave portion 10, a shaped member for a brake piston as a forged product 25 was formed by subjecting the blank 20 to cold backward extrusion forging. Next, the occurrence rate of defects caused by drawing the skin and occurrence of seizures on the inner peripheral surface 21a for the forged product 25 were evaluated. The results are shown in Table 4.

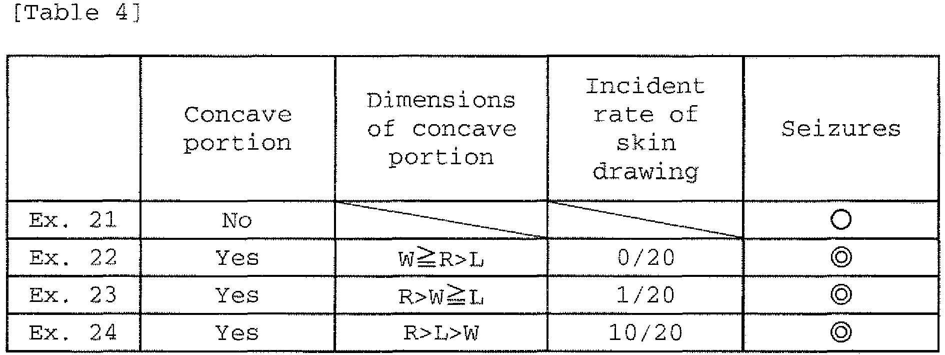

Example 21 was a case in which the blank 20 was subjected to cold backward extrusion forging using a forming die 8 in which the concave portion 10 was not formed, and Examples 22-24 were cases in which the blank 20 was subjected to cold backward extrusion forging using a forming die 8 in which a concave portion 10 was formed. R used for forging was 10 mm and L was 3 mm. In the forged product 25, D was 28 mm and F was 33 mm. In addition, in the punch 1 used for forging, the forming R-portion 3 was smoothly and continuously formed with the forming land portion 2. The constituent material of the punch 1 was a hard metal and the hardness of the punch 1 was HV1400. The "dimension of concave portion" in Table 4 shows the magnitude relationship of the dimensions of the opening width W of the concave portion 10, R, and L. The "incidence rate of skin drawing" shows the number of incidences of defects cause by drawing the skin on the forged product 25 when forging was performed twenty times. The meanings of the symbols in the column of "seizures" are as follows.

⊚: No seizure occurred on the inner peripheral surface 21a and the glossiness of the inner peripheral surface 21a was high
○ : No seizure occurred on the inner peripheral surface 21a and the glossiness of the inner peripheral surface 21 was low

As it can be understood from Table 4, when the blank 20 was subjected to cold backward extrusion forging using a forming die 8 in which a concave portion 10 was formed (Examples 22-24), a shaped member with no seizure and having high glossiness of the inner peripheral surface 21a could be obtained. Especially, when the opening width W of the concave portion 10 was larger than L (Examples 22 and 23), a high-quality forged product 25 with very low incidence rate of skin drawing could be obtained. The most preferable condition was where the opening width W of the concave portion 10 was not smaller than R. (Example 22)

### <Examples 31-35>

The blank 20 of type M2 as shown in Tables 1 and 2 was prepared. Then, using the cold backward extrusion forging device 15 of the first embodiment, a shaped member for a brake piston as a forged product 25 was formed by variously changing the surface roughness Ra, Rz and waviness Wa, Wz of the upper surface 20a and the outer peripheral surface 20b of the blank 20 and subjecting the blank 20 to cold backward extrusion forging. R used for the forging was 10 mm and L was 3 mm. In the forged product 25, D was 28 mm and F was 30 mm. In addition, in the punch 1 used for forging, the forming R-portion 3 was smoothly and continuously formed with the forming land portion 2. The constituent material of the punch 1 was a hard metal and the hardness of the punch 1 was HV1400. Next, occurrence of seizures of the inner peripheral surface 21a of the forged product 25 was evaluated. The results are shown in Table 5.

**[Table 5]**

| | Measured surface of blank | Surface roughness (µm) | | Waviness (µm) | | Seizures |
|---|---|---|---|---|---|---|
| | | Ra | Rz | Wa | Wz | |
| Ex. 31 | Upper surface | 0.664 | 4.663 | 1.145 | 6.649 | Δ |
| | Outer peripheral surface | 0.229 | 2.012 | 0.233 | 2.011 | |
| | Ratio | 2.9 | 2.32 | 4.91 | 3.31 | |
| Ex. 32 | Upper surface | 1.039 | 6.32 | 1.339 | 7.225 | Δ |
| | Outer peripheral surface | 0.2 | 1.76 | 0.252 | 2.619 | |
| | Ratio | 5.2 | 3.59 | 5.31 | 2.76 | |
| Ex. 33 | Upper surface | 0.718 | 5.762 | 0.734 | 4.943 | ○ |
| | Outer peripheral surface | 0.861 | 8.544 | 0.8 | 7.871 | |
| | Ratio | 0.83 | 0.67 | 0.92 | 0.63 | |
| Ex. 34 | Upper surface | 0.856 | 7.54 | 0.959 | 7.87 | ○ |
| | Outer peripheral surface | 1.163 | 12.782 | 0.796 | 6.177 | |
| | Ratio | 0.74 | 0.59 | 1.2 | 1.27 | |
| Ex. 35 | Upper surface | 0.833 | 5.816 | 1.083 | 9.172 | ⊚ |
| | Outer peripheral surface | 0.744 | 6.478 | 1.142 | 10.558 | |
| | Ratio | 1.12 | 0.9 | 0.95 | 0.87 | |

In the column of "measured surface of blank" in Table 5, the "upper surface" means the upper surface 20a of the blank 20, the "outer peripheral surface" means the outer peripheral surface 20b of the blank 20, and the "ratio" refers to a value in which each measured value (Ra, Rz, Wa and Wz) of the upper surface 20a of the blank 20 is divided by each measured value (Ra, Rz, Wa and Wz) of the outer peripheral surface 20b of the blank 20. Ra, Rz, Wa and Wz are values measured in compliance with JIS B0601:2001. In addition, the lower surface of the blank 20 was adjusted to have the same surface properties as the upper surface 20a. The meanings of the symbols in the "seizures" column are as follows.

⊚ : No seizure occurred on the inner peripheral surface 21a and the glossiness of the inner peripheral surface 21a was high.
○ : No seizure occurred on the inner peripheral surface 21a and the glossiness of the inner peripheral surface 21a was slightly high.
Δ : No seizure occurred on the inner peripheral surface 21a of the glossiness of the inner peripheral surface 21a was slightly low.

As it can be understood from Table 5, when at least one of a value obtained by diving a surface roughness Ra of the upper surface 20a of the blank 20 by a surface roughness Ra of the outer peripheral surface 20b of the blank 20, a value obtained by diving the surface roughness Rz of the upper surface 20a of the blank 20 by the surface roughness Rz of the outer peripheral surface 20b of the blank 20, a value obtained by dividing the waviness Wa of the upper surface 20a of the blank 20 by waviness Wa of the outer peripheral surface 20b of the blank 20, and a value obtained by diving the waviness Wz of the upper surface 20a of the blank 20 by the waviness Wz of the outer peripheral surface 20b of the blank 20 is set within a range of 0.5-1.5 (more preferably 0.85-1.2) (Examples 33-35), occurrence of seizures between the punch 1 and the inner peripheral surface 21a of the blank 20 (forged product 25) could be assuredly prevented. Especially when all of these values were set within a range of 0.5-1.5 (more preferably 0.85-1.2), occurrence of seizures could be further assuredly prevented.

Furthermore, it was found that it is especially preferred that the surface roughness Ra of the outer peripheral surface 20b of the blank 20 is within a range of 0.6-1.5 µm and the surface roughness Rz of the outer peripheral surface 20b of the blank 20 is within a range of 5-15 µm to prevent occurrence of seizures. Furthermore, it was found that it is especially preferred that the waviness Wa of the outer peripheral surface 20b of the blank 20 is within a range of 0.7-1.5 µm and the waviness Wz of the outer peripheral surface 20b of the blank 20 is within a range of 5-15 µm to prevent occurrence of seizures. Therefore, to prevent occurrence of seizures, it was found that it is preferred that the blank 20 has an appropriate surface roughness rather than reduced roughness.

The present invention claims priority to Japanese Patent Application No. 2010-283491 filed on December 20, 2010, the entire disclosure of which is incorporated herein by reference in its entirety.

The terms and descriptions used herein are used only for explanatory purposes and the present invention is not limited to them. The present invention allows various design-changes falling within the claimed scope of the present invention unless it deviates from the spirits of the invention.

While the present invention may be embodied in many different forms, a number of illustrative embodiments are described herein with the understanding that the present disclosure is to be considered as providing examples of the principles of the invention and such examples are not intended to limit the invention to preferred embodiments described herein and/or illustrated herein.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to." In this disclosure and during the prosecution of this application, means-plus-function or step-plus-function limitations will only be employed where for a specific claim limitation all of the following conditions are present in that limitation: a) "means for" or "step for" is expressly recited; b) a corresponding function is expressly recited; and c) structure, material or acts that support that structure are not recited. In this disclosure and during the prosecution of this application, the terminology "present invention" or "invention" may be used as a reference to one or more aspect within the present disclosure. The language present invention or invention should not be improperly interpreted as an identification of criticality, should not be improperly interpreted as applying across all aspects or embodiments (i.e., it should be understood that the present invention has a number of aspects and embodiments), and should not be improperly interpreted as limiting the scope of the application or claims. In this disclosure and during the prosecution of this application, the terminology "embodiment" can be used to describe any aspect, feature, process or step, any combination thereof, and/or any portion thereof, etc. In some examples, various embodiments may include overlapping features. In this disclosure and during the prosecution of this case, the following abbreviated terminology may be employed: "e.g." which means "for example;" and "NB" which means "note well."

### INDUSTRIAL APPLICABILITY

The present invention can be used as a punch for cold backward extrusion forging, a cold backward extrusion forging device, a production method of a shaped member for a brake piston, a production method of a brake piston, and a production method of a closed-end cylindrical forged product.

### DESCRIPTION OF THE REFERENCE NUMERALS

1: punch
2: forming land portion
3: forming R-portion
4: forming tip end face
5: recess portion
7: punch axis
8: forming die
9: forming cavity
10: concave portion
15: cold backward extrusion forging device
20: blank
20a: upper surface of the blank
20b: outer peripheral surface of the blank
25: forged product (shaped member for a brake piston)

## Claims

1. A punch for cold backward extrusion forging for use in producing a closed-end cylindrical forged product by subjecting a metal blank to cold backward extrusion forging, comprising:
a forming land portion formed in parallel with a punch axis;
a forming R-portion having an arc-shaped cross-section and formed continuously with the forming land portion on a tip end side with respect to the forming land portion; and
a recess portion formed on a base end side with respect to the forming land portion and having a diameter smaller than a diameter of the forming land portion,
wherein a Rockwell hardness HRF of the blank is within a range of 65 to 105,
wherein a curvature radius of the forming R-portion is set to be larger than a thickness of a cylindrical peripheral wall portion of the forged product,
wherein a length of the forming land portion is set within a range of 0.05 to 0.15 mm, and
wherein a recess width of the recess portion with respect to the forming land portion is set within a range of 0.15 to 1.0 mm.

2. A cold backward extrusion forging device equipped with the punch as recited claim 1.

3. A production method of a shaped member for a brake piston in which a metal blank is subjected to cold backward extrusion forging to form a shaped member for a closed-end cylindrical brake piston using a punch for cold backward extrusion forging, the punch including a forming land portion formed in parallel with a punch axis, a forming R-portion having an arc-shaped cross-section and formed continuously with the forming land portion on a tip end side with respect to the forming land portion, and a recess portion formed on a base end side with respect to the forming land portion and having a diameter smaller than a diameter of the forming land portion,
wherein a Rockwell hardness HRF of the blank is set within a range of 65 to 105,
wherein a curvature radius of the forming R-portion of the punch is set to be larger than a thickness of a cylindrical peripheral wall portion of the shaped member,
wherein a length of the forming land portion of the punch is set within a range of 0.05 to 0.15 mm, and
wherein a recess width of the recess portion of the punch with respect to the forming land portion is set within a range of 0.15 to 1.0 mm.

4. The production method of a shaped member for a brake piston as recited in claim 3,
wherein the blank is subjected to cold backward extrusion forging in a forming cavity of a forming die corresponding to the punch,
wherein an outer peripheral edge portion of a bottom surface of the forming cavity of the forming die is provided with a concave portion formed continuously from a peripheral surface of the forming cavity, and
wherein the concave portion is configured to control stagnation of a material of the blank at a corner and vicinity thereof in the forming cavity between the bottom surface of the forming cavity and the peripheral surface of the forming cavity by allowing inflow of the material of the blank into the concave portion at the time of forging the blank.

5. The production method of a shaped member for a brake piston as recited in claim 4,
wherein an opening width of the concave portion is set to be equal to or larger than a thickness of the peripheral wall portion of the shaped member.

6. The production method of a shaped member for a brake piston as recited in claim 4 or 5,
wherein a side surface of the concave portion arranged on a center side of the forming cavity is inclined so that an opening width of the concave portion becomes wider.

7. The production method of a shaped member for a brake piston as recited in any one of claims 3 to 6,
wherein at least one of a value obtained by dividing a surface roughness Ra of an upper surface of the blank by a surface roughness Ra of an outer peripheral surface of the blank, a value obtained by dividing a surface roughness Rz of an upper surface of the blank by a surface roughness Rz of an outer peripheral surface of the blank, a value obtained by dividing a waviness Wa of an upper surface of the blank by a waviness Wz of an outer peripheral surface of the blank, and a value obtained by dividing a waviness Wz of an upper surface of the blank by a waviness Wz of an outer peripheral surface of the blank is set within a range of 0.5 to 1.5.

8. The production method of a shaped member for a brake piston as recited in any one of claims 3 to 7, wherein a constituent material of the blank is an aluminum alloy subjected to a solution treatment without being subjected to an O-treatment.

9. A production method of a brake piston, comprising:
subjecting the shaped member for a brake piston obtained by the production method of a shaped member for a brake piston as recited in any one of claims 3 to 8 to an artificial aging treatment.

10. A production method of a closed-end cylindrical forged product in which a metal blank is subjected to cold backward extrusion forging to form the closed-end forged product using a punch for cold backward extrusion forging, the punch including a forming land portion formed in parallel with a punch axis, a forming R-portion having an arc-shaped cross-section and formed continuously with the forming land portion on a tip end side with respect to the forming land portion, and a recess portion formed on a base end side with respect to the forming land portion and having a diameter smaller than a diameter of the forming land portion,
wherein a Rockwell hardness HRF of the blank is set within a range of 65 to 105,
wherein a curvature radius of the forming R-portion of the punch is set to be larger than a thickness of a cylindrical peripheral wall portion of the forged product,
wherein a length of the forming land portion of the punch is set within a range of 0.05 to 0.15 mm, and
wherein a recess width of the recess portion with respect to the forming land portion of the punch is set within a range of 0.15 to 1.0 mm.
